# EUROPÄISCHE PATENTSCHRIFT

(11) **EP 4 644 741 B1**
(45) Veröffentlichungstag und Bekanntmachung des Hinweises auf die Patenterteilung: **25.11.2026**
(21) Anmeldenummer: 25171785.6
(22) Anmeldetag: 22.04.2025
(51) Int. Cl.: F16K 7/12, F16K 31/06, F16K 41/10

(54) **MAGNETVENTIL**
SOLENOID VALVE
VANNE MAGNÉTIQUE

(30) Priorität: 29.04.2024 DE 102024112016
(43) Veröffentlichungstag der Anmeldung: 05.11.2025
(73) Patentinhaber: Bürkert Werke GmbH & Co. KG, 74653 Ingelfingen (DE)
(72) Erfinder: BEZOLD, Christian, 74653 Ingelfingen (DE); LINK, Dina, 74653 Ingelfingen (DE)
(74) Vertreter: Prinz & Partner mbB

(56) Entgegenhaltungen:
- WO-A1-99/36718
- JP-A- 2000 193 105
- US-A- 6 073 646

## Beschreibung

Die Erfindung betrifft ein Magnetventil, das eine Membran umfasst, die mit einem Ventilsitz zusammenwirkt, wobei ein zwischen einer Öffnungsstellung und einer Schließstellung beweglich gelagertes Stellglied mit der Membran gekoppelt ist und das Stellglied in der Schließstellung die Membran auf den Ventilsitz drückt und in der Öffnungsstellung die Membran vom Ventilsitz abhebt.

Insbesondere handelt es sich bei dem Magnetventil um ein mediengetrenntes Ventil, das heißt, dass der Ventilantrieb gegenüber dem mit dem Ventil geregelten Medium isoliert ist.

Zu diesem Zweck ist üblicherweise die im Ventil vorhandene Membran als Trennmembran ausgebildet, das heißt, die Membran dichtet nicht nur den Ventilsitz ab, sondern dient auch zur Abdichtung des Ventilantriebs.

Nachteilig bei derartigen Ventilen ist, dass die medienberührte Fläche der Membran unter Umständen relativ groß ist. Über die medienberührte Fläche wird somit, je nach Betrag des am Ventileingang anstehenden Fluiddrucks, eine entsprechend hohe Kraft auf das Stellglied übertragen, gegen die das Stellglied arbeiten muss. Als Konsequenz ist die Verwendung eines entsprechend starken Elektromagneten im Ventilantrieb notwendig, um das Ventil zu schalten. Anderenfalls kann es am Ventilsitz zu einer Leckage kommen. Je größer der Elektromagnet ist, umso größer sind jedoch der notwendige Bauraum sowie der Energieverbrauch des Elektromagneten.

Die US 2017/0017243 A1 beschreibt ein Magnetventil und ein Verfahren zur Steuerung des Magnetventils.

Die CN 112228588 B offenbart ein elektromagnetisches Ventil mit einer Membran zum Absperren eines Ventilkanals.

Die WO 99/36718 A1 beschreibt ein Mehrstufen-Magnetventil mit einem Betätigungselement, das mindestens drei definierte Schaltstellungen hat, und mit einem Verschlusselement, das in der ersten Stellung das Ventil verschließt, in der zweiten Stellung einen begrenzten Durchfluss erlaubt und in der dritten Stellung das Ventil voll öffnet.

Die US 6 073 646 A offenbart eine Gasregelungsvorrichtung mit einem Membranventil.

Die JP 2000 193105 A beschreibt ein Membranventil, wobei ein Rissversagen im Grenzbereich zwischen einem festem und einem flexiblen Bereich der Membran verhindert werden soll.

Es ist daher eine Aufgabe der Erfindung, ein Magnetventil bereitzustellen, das eine kompakte Bauweise hat und gleichzeitig ein dichtes Schließen des Ventils gewährleistet.

Diese Aufgabe wird erfindungsgemäß gelöst durch ein Magnetventil, insbesondere ein mediengetrenntes Magnetventil, mit einem Ventilantrieb, der einen Elektromagneten umfasst, einem mittels des Ventilantriebs zwischen einer Öffnungsstellung und einer Schließstellung beweglich gelagerten Stellglied, einem Fluidgehäuse mit einem Ventilsitz, wobei in dem Fluidgehäuse ein Fluidkanal von einem ersten Fluidanschluss zum Ventilsitz und ausgehend von dem Ventilsitz zu einem zweiten Fluidanschluss verläuft, einer Membran, die mit dem Ventilsitz zusammenwirkt, wobei das Stellglied mit der Membran gekoppelt ist, so dass das Stellglied in der Schließstellung die Membran auf den Ventilsitz drückt und in der Öffnungsstellung die Membran vom Ventilsitz abhebt, und einem in Bewegungsrichtung des Stellglieds beweglich gelagerten Stützring, der das Stellglied umgibt und der an der Membran anliegt. Zwischen dem Stützring und dem Stellglied ist eine Mitnahmegeometrie vorhanden, die derart ausgebildet ist, dass bei einer Bewegung des Stellglieds von der Schließstellung in die Öffnungsstellung ein Leerhub zwischen dem Stellglied und dem Stützring vorhanden ist, derart, dass bei einer anfänglichen Bewegung des Stellglieds aus der Schließstellung heraus keine Bewegung des Stützrings bewirkt wird und nach Überbrücken des Leerhubs der Stützring durch die Mitnahmegeometrie zusammen mit dem Stellglied in Richtung der Öffnungsstellung des Stellglieds bewegt wird.

Der Stützring übt zusätzlich zum Stellglied eine Schließkraft auf die Membran aus, wodurch das Magnetventil auch bei erhöhtem Fluiddruck zuverlässig geschlossen gehalten werden kann. Konkret stellt der Stützring eine Ringfläche bereit, welche die Membran zusätzlich abstützt. Dadurch ist die Kraft, die das Stellglied in geschlossenem Zustand des Magnetventils auf die Membran aufbringen muss, reduziert.

Der Stützring verhindert zudem ein Aufdehnen der Membran, wodurch die Lebensdauer verlängert wird, da es weniger schnell zu Materialermüdung kommt.

Indem zwischen dem Stellglied und dem Stützring ein Leerhub vorhanden ist, wird der Stützring erst dann vom Ventilsitz abgehoben, wenn sich das Stellglied dem Elektromagneten bereits ein Stück weit genähert hat, wodurch eine größere Magnetkraft auf das Stellglied wirkt. Dadurch kann die mechanische Arbeit des Elektromagneten besser ausgenutzt werden. Insbesondere ist eine geringere magnetische Leistung erforderlich, das heißt, es kann im Vergleich zu einem Ventil ohne Stützring bei gleicher Ventilnennweite eine kleinere Magnetspule verwendet werden, was wiederum vorteilhaft im Hinblick auf den benötigten Bauraum ist. Auch der Stromverbrauch des Elektromagneten ist dadurch reduziert.

Durch die zusätzliche Abstützung der Membran ist es möglich, das Magnetventil sowohl übersitzangeströmt als auch untersitzangeströmt zu betreiben.

Der Stützring hat aufgrund des Leerhubs im Vergleich zum Stellglied insbesondere einen reduzierten Hub.

Das Stellglied und der Stützring sind beispielsweise jeweils mittels einer Feder zum Ventilsitz hin mit einer Federkraft beaufschlagt. Die Federn stellen die erforderliche Schließkraft bereit, um das Magnetventil entgegen dem Fluiddruck zu schließen und im stromlosen Zustand des Magnetventils geschlossen zu halten.

Bei geöffnetem Magnetventil ist die druckbeaufschlagte Membranfläche relativ hoch, sodass der Fluiddruck eine relativ hohe Kraft auf die Membran bewirkt. Indem zwei parallel wirkende Federn vorhanden sind, die auf das Stellglied und den Stützring wirken, ist die Schließkraft groß genug, um die Membran entgegen dem Fluiddruck an den Ventilsitz anzulegen.

Die beiden Federn können einteilig miteinander verbunden sein, insbesondere wobei die beiden Federn in einer Schnittdarstellung betrachtet M-förmig verlaufen, wobei der V-förmige innere Abschnitt der Feder gegen das Stellglied und der zylindrische äußere Abschnitt gegen den Stützring drückt. Das heißt, durch die M-förmige Ausbildung der Federn können diese trotz der einteiligen Verbindung miteinander auf radial zueinander beabstandete Flächen einwirken. Indem die beiden Federn einteilig ausgebildet sind, ist die Handhabung der Federn bei der Montage erheblich vereinfacht.

Gemäß einer Ausführungsform hat das Stellglied einen zum Ventilsitz konisch zulaufenden Zwischenabschnitt, in dem die am Stellglied angreifende Feder sitzt. Dies trägt zu einer kompakten Bauweise des Ventils bei, insbesondere im Hinblick auf den Bauraumbedarf in radialer Richtung.

Beispielsweise ist eine Ankerhülse vorgesehen, die sich auch seitlich des Stellglieds erstreckt. Die Ankerhülse kann an ihrem dem Ventilsitz nahen Ende einen Radialflansch haben, an dem die das Stellglied beaufschlagende Feder und die den Stützring beaufschlagende Feder abgestützt sind, wodurch auf einfache Weise eine durchgehende Abstützfläche für die Federn bereitgestellt ist.

Das Magnetventil kann ein am Fluidgehäuse befestigbares Ventilgehäuse umfassen, wobei das Ventilgehäuse einen Aufnahmeraum aufweist, in dem der Stützring angeordnet ist.

Um zu gewährleisten, dass der Stützring nicht mit zu hoher Kraft auf die Membran drückt, ist vorzugsweise in dem Ventilgehäuse ein Anschlag vorhanden, der eine Bewegung des Stützrings in Richtung zum Ventilsitz hin begrenzt. Dies wirkt sich positiv auf die Lebensdauer der Membran aus.

Der Stützring ist beispielsweise im Ventilgehäuse axial geführt. Durch die axiale Führung ist der Stützring gleichzeitig radial positioniert, sodass die Abstützung der Membran durch den Stützring automatisch an der korrekten Position erfolgt.

Im Aufnahmeraum kann ein vom Ventilgehäuse nach radial innen vorstehender Vorsprung vorhanden sein, der an der Membran anliegt. Der Vorsprung kann zum Abstützen der Membran dienen und gleichzeitig auch den Anschlag für den Stützring bilden. Dies trägt ebenfalls zu einer kompakten Bauweise bei.

Gemäß einer Ausführungsform ist die Mitnahmegeometrie durch einen am Stützring nach radial innen ragenden Kragen gebildet, der mit einem vom Stellglied nach radial außen abstehenden Kragen in radialer Richtung überlappend angeordnet ist. In geschlossenem Zustand des Magnetventils ist zwischen den beiden Kragen insbesondere ein axialer Abstand vorhanden, zur Schaffung des Leerhubs.

Konkret kann die Mitnahmegeometrie durch einen am Stützring nach radial innen ragenden Kragen oder einen am Stellglied nach außen ragenden Kragen gebildet sein, der in eine Nut am Stellglied bzw. am Stützring ragt und mit einem axialen Spiel in der Nut sitzt, wobei das Spiel den Leerhub definiert.

In beiden Fällen ist die Mitnahmegeometrie auf mechanisch einfache Weise realisiert.

Die medienberührte Fläche der Membran ist vorzugsweise flach ausgebildet. Dadurch hat die Membran eine geringe Bauhöhe und ist leicht zu reinigen. Zudem ist das fluidgefüllte Volumen im Fluidgehäuse reduziert.

Um die Membran mit dem Stellglied zu koppeln, kann an der Membran eine Koppelungsgeometrie vorhanden sein und im Stellglied kann eine Aufnahme ausgebildet sein, in der die Koppelungsgeometrie formschlüssig aufgenommen ist.

Alternativ kann am Stellglied eine Koppelungsgeometrie ausgebildet sein, wobei an der Membran eine Aufnahme vorhanden ist, in der die Koppelungsgeometrie formschlüssig aufgenommen ist.

Die beiden vorgenannten Alternativen ermöglichen eine einfache Koppelung der Membran mit dem Stellglied und auch einen einfachen Austausch, wenn die Membran aufgrund von Verschleiß ersetzt werden muss.

Die Alternative, bei der die Aufnahme im Stellglied ausgebildet ist, ermöglicht zudem eine in radialer Richtung besonders kompakte Bauweise.

Weitere Vorteile und Merkmale der Erfindung ergeben sich aus der nachfolgenden Beschreibung und aus den beiliegenden Zeichnungen, auf die Bezug genommen wird. In den Zeichnungen zeigen:
- Figur 1 ein erfindungsgemäßes Magnetventil in einer Schnittansicht,
- Figur 2 das Magnetventil aus Figur 1 in einer Explosionsdarstellung,
- Figur 3 eine Schnittdarstellung des Magnetventils aus Figur 1 im Bereich des Ventilsitzes in geschlossenem Zustand des Magnetventils,
- Figur 4 eine Schnittdarstellung des Magnetventils aus Figur 1 im Bereich des Ventilsitzes in halb geöffnetem Zustand des Magnetventils,
- Figur 5 eine Schnittdarstellung des Magnetventils aus Figur 1 im Bereich des Ventilsitzes in maximal geöffneten Zustand des Magnetventils,
- Figur 6 eine Teilbaugruppe einer alternativen erfindungsgemäßen Ausführungsform,
- Figur 7 ein erfindungsgemäßes Magnetventil gemäß einer weiteren Ausführungsform in einer Schnittansicht, und
- Figur 8 eine Schnittdarstellung des Magnetventils aus Figur 6 im Bereich des Ventilsitzes in geschlossenem Zustand des Magnetventils.

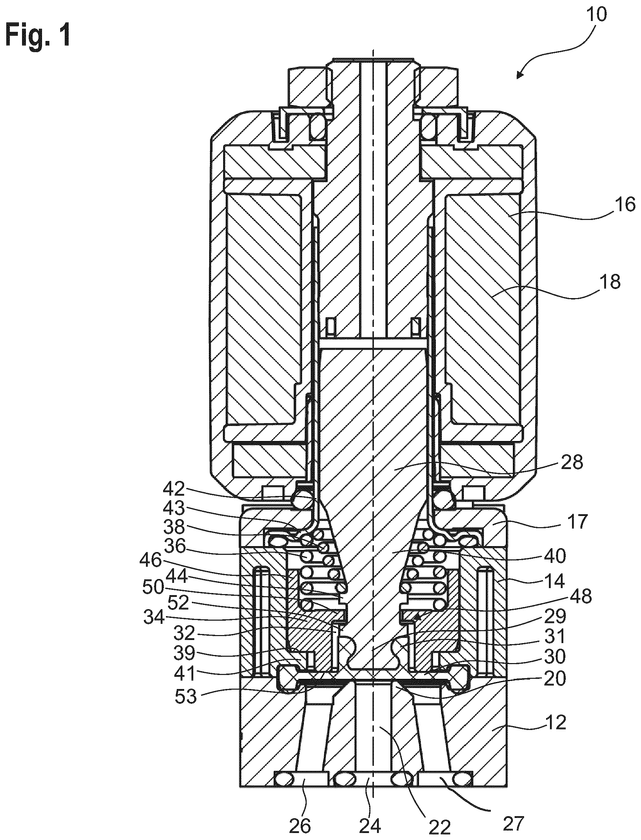

Figur 1 zeigt ein Magnetventil 10 in einer Schnittdarstellung. Das Magnetventil 10 ist ein Membranventil, insbesondere ein Hubankerventil.

Beispielsweise kommt das Magnetventil 10 bei Wasserstoffanwendungen zum Einsatz, es ist jedoch nicht darauf beschränkt.

Das Magnetventil 10 umfasst ein Fluidgehäuse 12, ein Ventilgehäuse 14 und einen Ventilantrieb 16, der einen Elektromagneten 18 umfasst.

Das Fluidgehäuse 12 ist mit dem Ventilgehäuse 14 befestigt, auf dem wiederum der Ventilantrieb 16 aufgesetzt ist.

Zusätzlich ist ein Flansch 17 vorgesehen, der das Ventilgehäuse 14 nach oben hin abschließt.

Im Fluidgehäuse 12 ist ein Ventilsitz 20 ausgebildet. Ein Fluidkanal 22 verläuft im Fluidgehäuse 12 ausgehend von einem ersten Fluidanschluss 24 zum Ventilsitz 20 und ausgehend von dem Ventilsitz 20 zu einem zweiten Fluidanschluss 26. Alternativ kann auch ein dritter Fluidanschluss 27 vom Ventilsitz 20 ausgehen oder zu ihm führen.

Das Magnetventil 10 umfasst des Weiteren ein beweglich gelagertes, stößelartiges Stellglied 28, das mittels des Ventilantriebs 16 zwischen einer Öffnungsstellung und einer Schließstellung bewegt werden kann.

Mit dem Ventilsitz 20 wirkt eine Membran 30 zusammen, deren medienberührte Fläche im Ausführungsbeispiel flach ausgebildet ist.

Die Membran 30 ist beispielsweise aus einem Elastomerwerkstoff hergestellt, insbesondere aus Perfluor-Kautschuk (FFKM) oder Ethylen-Propylen-Dien-Kautschuke (EPDM).

Die Membran 30 ist zwischen dem Fluidgehäuse 12 und dem Ventilgehäuse 14 klemmend gehalten. Dadurch dient die Membran 30 auch zur Abdichtung des Ventilantriebs 16 gegenüber dem Fluidgehäuse 12.

Optional kann die Membran 30 einen randseitigen Wulst haben, der in Nuten im Fluidgehäuse 12 und im Ventilgehäuse 14 eindringt und darin auch geklemmt ist.

Das Stellglied 28 ist mit der Membran 30 z.B. formschlüssig gekoppelt, so dass das Stellglied 28 in der Schließstellung die Membran 30 auf den Ventilsitz 20 drückt und in der Öffnungsstellung die Membran 30 vom Ventilsitz 20 abhebt.

Die Koppelung der Membran 30 mit dem Stellglied 28 ist im Ausführungsbeispiel dadurch realisiert, dass am Stellglied 28 eine z.B. pilzförmige Koppelungsgeometrie 29 vorhanden ist und an der Membran 30 eine komplementäre Aufnahme 31 vorhanden ist, in der die Koppelungsgeometrie 29 formschlüssig aufgenommen ist.

In dem Ventilgehäuse 14 ist ein Aufnahmeraum 32 vorhanden, in dem ein hülsenförmiger Stützring 34 sowie eine erste Feder 36 und eine zweite Feder 38 untergebracht sind.

Der Stützring 34 ist in Bewegungsrichtung des Stellglieds 28 beweglich gelagert, wobei der Stützring 34 auf seinem Außenumfang im Ventilgehäuse 14 axial geführt ist.

Zur Begrenzung der Bewegung des Stützrings 34 in Richtung zum Ventilsitz 20 hin ist im Ventilgehäuse 14 ein Anschlag 39 vorhanden, der durch eine Stufe im Ventilgehäuse 14 gebildet ist.

Durch die Stufe ist ein vom Ventilgehäuse 14 nach radial innen vorstehender Vorsprung 41 gebildet, der an der Membran 30 anliegt und diese abstützt.

Der Stützring 34 und das Stellglied 28 sind jeweils mittels einer der beiden Federn 36, 38 zum Ventilsitz hin kraftbeaufschlagt, sodass der Stützring 34 und das Stellglied 28 in stromlosen Zustand des Magnetventils 10 in eine Schließstellung bewegt werden bzw. in dieser gehalten werden.

Dabei sind die Federn 36, 38 konzentrisch zueinander und in axialer Richtung überlappend angeordnet.

Um eine kompakte Bauweise zu ermöglichen, hat das Stellglied 28 einen zum Ventilsitz 20 konisch zulaufenden Zwischenabschnitt 40, in dem die am Stellglied 28 angreifende Feder 38 sitzt.

Beide Federn 36, 38 stützen sich an einer Ankerhülse 42 ab, die sich auch seitlich des Stellglieds 28 erstreckt und die an ihrem dem Ventilsitz 20 nahen Ende einen durch Umformen hergestellten Radialflansch 43 hat. Konkret stützen sich die Federn 36, 38 am Radialflansch ab.

Der Radialflansch 43 der Ankerhülse 42 ist wiederum am Flansch 17 abgestützt.

Am Stellglied 28 ist zudem ein Vorsprung 44 vorgesehen, an dem sich die Feder 38 mit ihrem entgegengesetzten Ende abstützt.

Die dem Stützring 34 zugeordnete Feder 36 liegt an einer Stirnseite des Stützrings 34 an.

Um eine präzise Positionierung der Feder 36 zu gewährleisten, ist am Stützring 34 ein von der Stirnfläche zum Ventilantrieb 16 hin axial abstehender Kragen 46 vorhanden, der eine seitliche Führung für die Feder 36 bildet.

In der Schnittdarstellung ist ersichtlich, dass die Federn 36, 38 gemeinsam betrachtet M-förmig verlaufen. Konkret ist die Feder 36, die den Stützring 34 beaufschlagt, zylindrisch, während die Feder 38, die das Stellglied 28 beaufschlagt, V-förmig ist.

Das Stellglied 28 ragt aus dem Ventilantrieb 16 in den Aufnahmeraum 32 hinein und ist im Aufnahmeraum 32, wie erwähnt, mit der Membran 30 gekoppelt.

Außerdem ist das Stellglied 28 mit dem Stützring 34 gekoppelt.

Genauer gesagt ist zwischen dem Stützring 34 und dem Stellglied 28 eine Mitnahmegeometrie 48 vorhanden. Die Mitnahmegeometrie 48 ist derart ausgebildet, dass bei einer Bewegung des Stellglieds 28 von der Schließstellung in die Öffnungsstellung ein Leerhub zwischen dem Stellglied 28 und dem Stützring 34 vorhanden ist. Bei einer anfänglichen Bewegung des Stellglieds 28 aus der Schließstellung heraus wird folglich keine Bewegung des Stützrings 34 bewirkt und nach Überbrücken des Leerhubs wird der Stützring 34 durch die Mitnahmegeometrie 48 zusammen mit dem Stellglied 28 in Richtung der Öffnungsstellung des Stellglieds 28 bewegt.

Der Leerhub beträgt beispielsweise zwischen 0,2 und 0,5 mm, insbesondere 0,4 mm.

Die Mitnahmegeometrie 48 ist im Ausführungsbeispiel durch einen am Stützring 34 nach radial innen ragenden Kragen 50 gebildet, der mit einem vom Stellglied 28 nach radial außen abstehenden Kragen 52 in radialer Richtung überlappend angeordnet ist, sodass der Stützring 34 und das Stellglied 28 in axialer Richtung gekoppelt sind.

In einer alternativen Ausführungsform, die der Einfachheit halber nicht gezeigt ist, ist anstelle des Kragens 50 ein Querstift im Stellglied 28 eingesetzt, der den Stützring 34 mitnimmt.

In geschlossenem Zustand des Magnetventils 10 ist zwischen den beiden Krägen 50, 52 insbesondere ein axialer Abstand vorhanden, der dem Leerhub entspricht.

Zwischen dem Vorsprung 44 und dem Kragen 52 am Stellglied 28 wird eine Nut gebildet, in die der Kragen 50 ragt, wobei ein axiales Spiel des Kragens 50 in der Nut vorhanden ist, zur Schaffung des Leerhubs. Natürlich kann die Nut auch umgekehrt im Stützring 34 und der in die Nut ragende Kragen im Stellglied 28 vorhanden sein. Die Montage kann entweder durch eine Elastizität z.B. eines aus Kunststoff hergestellten Stützrings 34 oder durch Befestigung eines den Kragen 52 oder den Vorsprung 44 bildenden Rings erreicht werden oder durch eine Art Bajonett oder Ähnliches.

Der Stützring 34 wird folglich in derselben Achse bewegt wie das Stellglied 28, wodurch der Aufbau des Magnetventils 10 hinsichtlich der Komplexität und der Bauteilanzahl besonders einfach ist. Alle Kräfte und Bewegungen wirken in einer Achse, es sind keine mechanischen Umlenkungen, Drehachsen oder sonstige komplexen Koppelungen notwendig. Insbesondere erfolgen alle Bewegungen in der Wirkrichtung des Elektromagneten 18, die der Bewegungsrichtung des Stellglieds 28 entspricht.

Der Stützring 34 liegt in geschlossenem Zustand des Magnetventils 10 an der Membran 30 an. Konkret ist der Stützring 34 mit der Membran 30 entlang einer ringförmigen Kontaktfläche 53 mit der Membran 30 in Kontakt.

Die ringförmige Kontaktfläche 53 ist radial von dem Stellglied 28 über den Umfang beabstandet. Konkret liegt die ringförmige Kontaktfläche 53 zwischen dem zentralen Bereich der Membran 30, mit dem das Stellglied gekoppelt ist, und dem starr eingespannten Bereich der Membran 30.

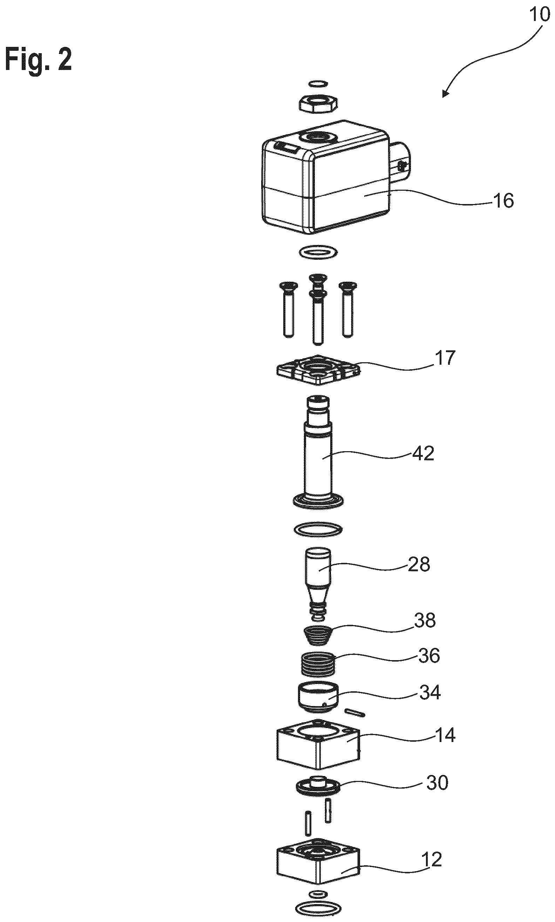

Figur 2 zeigt das Magnetventil 10 ergänzend in einer Explosionsdarstellung.

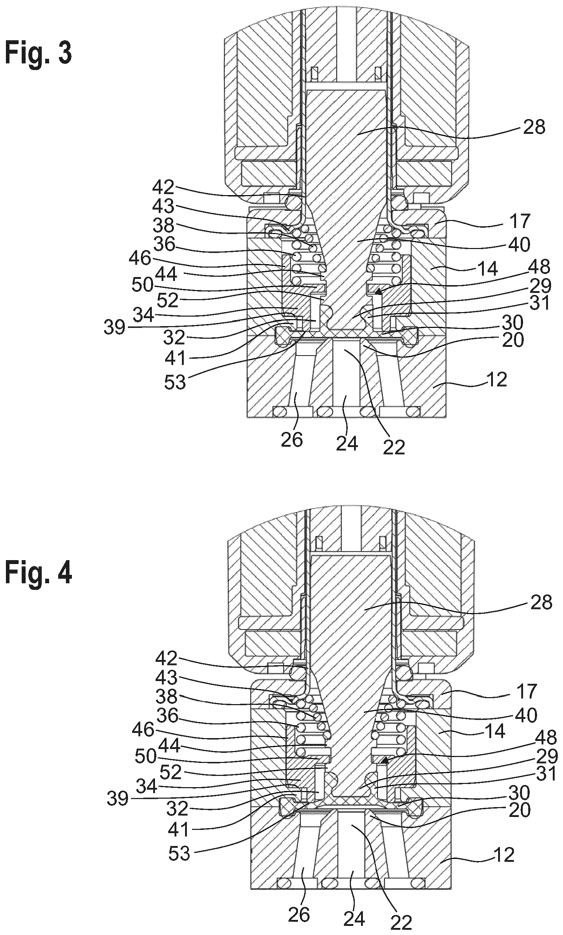

Anhand der Figuren 3 bis 5 wird im Folgenden ein Öffnungsvorgang des Magnetventils 10 beschrieben.

In Figur 3 ist das Magnetventil 10 in einem geschlossenen Zustand gezeigt. Das Magnetventil 10 ist insbesondere stromlos geschlossen.

In diesem Zustand drückt zum einen das Stellglied 28 die Membran 30 gegen den Ventilsitz 20, und zum anderen liegt der Stützring 34 an der Membran 30 an und stützt diese zusätzlich ab. Der Stützring 34 unterstützt sozusagen das Stellglied 28 dabei, das Magnetventil 10 entgegen dem am Fluideingang anliegenden Fluiddruck geschlossen zu halten. Konkret reduziert der Stützring 34 die vom Fluid ausgehende, auf das Stellglied 28 wirkende Kraft, indem es die von oben kraftbeaufschlagte Membranfläche und insgesamt die Schließkraft erhöht.

Der Fluideingang kann entweder durch den Fluidanschluss 24 oder durch den Fluidanschluss 26/27 gebildet sei, das heißt, das Magnetventil 10 kann übersitzangeströmt oder untersitzangeströmt sein.

In beiden Fällen wird durch das Stellglied 28 und durch den Stützring 34 bzw. durch die auf das Stellglied 28 und den Stützring 34 wirkenden Federkräfte in Kombination das Magnetventil 10 geschlossen gehalten.

Bei einem untersitzangeströmten Magnetventil 10 kann ein höherer Fluiddruck geschaltet werden als bei einem übersitzangeströmten Magnetventil 10. Beispielsweise kann mit dem in den Figuren 1 bis 5 veranschaulichten Magnetventil 10 bei einer Übersitzanströmung ein Fluiddruck von 2 bar geschaltet werden, während bei einer Untersitzanströmung ein Fluiddruck von 5 bar geschaltet werden kann. Diese Werte sind jedoch lediglich beispielhaft und hängen unter anderem auch vom Nenndurchmesser des Ventilsitzes 20 ab. Beispielsweise liegt der Nenndurchmesser bei dem in den Figuren 1 bis 5 veranschaulichten Magnetventil zwischen 3 mm und 5 mm.

In beiden Fällen ist es durch die zusätzliche Abstützwirkung des Stützrings 34 möglich, einen höheren Fluiddruck zu schalten, als dies ohne den Stützring 34 der Fall wäre. Insbesondere erhöht der Stützring 34 den möglichen Fluiddruck am Fluideingang um 50%. Man spricht in diesem Zusammenhang auch von einer sogenannten Rückdruckdichtheit.

Gleichzeitig verbessert der Stützring 34 durch die Abstützung der relativ dünnen und großflächig ausgelegten Membran 30 die Druckstabilität der Membran 30, indem eine unkontrollierte Aufdehnung der Membran 30 verhindert wird. Auf diese Weise lässt sich auch die Lebensdauer der Membran 30 verlängern.

Bei einem Öffnungsvorgang des Magnetventils 10 wird durch Bestromen des Elektromagneten 18 zunächst das Stellglied 28 aus seiner Schließposition herausbewegt, wie es in Figur 4 veranschaulicht ist.

Der Stützring 34 bleibt aufgrund des zwischen dem Stellglied 28 und des Stützrings 34 vorhandenen Leerhubs zunächst in seiner Ausgangsposition und liegt weiterhin an der Membran 30 an.

Der Ventilantrieb 16, insbesondere der Elektromagnet 18, muss also zunächst lediglich die Kraft zur Bewegung des Stellglieds 28 aufbringen.

In der in Figur 4 dargestellten Position ist das Stellglied 28 um einen Betrag angehoben worden, der genau dem Leerhub entspricht.

Dabei hat sich der Luftspalt zwischen dem Stellglied 28 und dem Elektromagneten 18 verringert, wodurch in dieser Position eine höhere Kraft auf das Stellglied wirkt als es in der Schließposition des Stellglieds 28 der Fall ist.

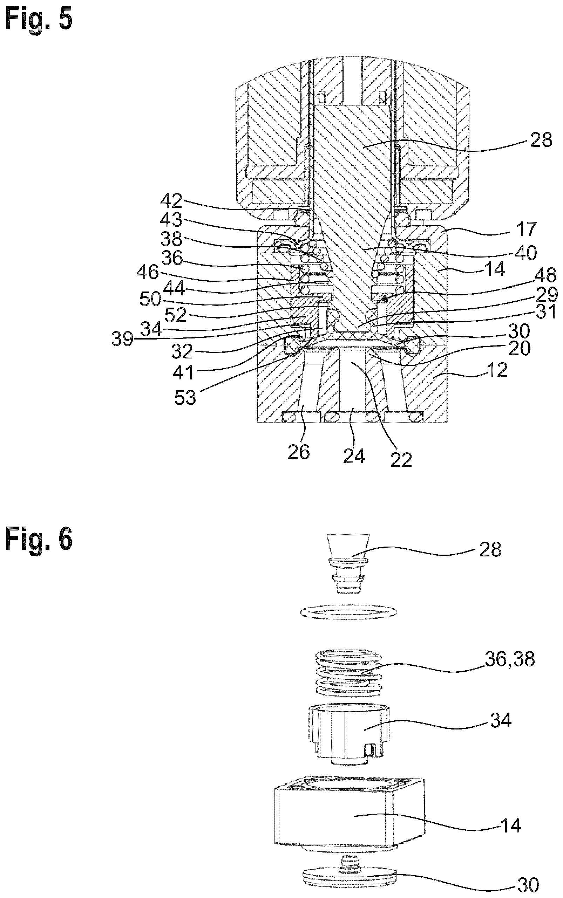

Aufgrund der erhöhten Kraft auf das Stellglied 28 ist es nach Überbrücken des Leerhubs möglich, den Stützring 34 ebenfalls aus seiner Ausgangsposition herauszubewegen, sodass das Magnetventil 10 vollständig geöffnet wird, wie es in Figur 5 veranschaulicht ist.

Durch diesen zweistufigen Öffnungsvorgang kann die magnetische Leistung des Elektromagneten 18 besser ausgenutzt werden, wodurch eine Energieersparnis erreicht werden kann. Anders ausgedrückt ist es möglich, einen weniger leistungsstarken Elektromagneten 18 zu verwenden, als es der Fall wäre, wenn der Stützring 34 ohne Leerhub gleichzeitig mit dem Stellglied 28 bewegt werden müsste, was vorteilhaft hinsichtlich der Herstellkosten des Magnetventils 10 ist.

Der Elektromagnet 18 könnte nämlich keine ausreichend große Magnetkraft bereitstellen, um den Stützring 34 von Anfang an zusammen mit dem Stellglied 28 aus der Schließposition herauszubewegen; hierfür wäre ein leistungsstärkerer Elektromagnet 18 erforderlich.

Es wird vorliegend jedoch der Effekt ausgenutzt, dass die auf das Stellglied 28 wirkende Magnetkraft mit zunehmender Nähe zum Elektromagneten 18 ansteigt.

Zum Schließen des Magnetventils 10 werden das Stellglied 28 und der Stützring 34 durch die Federkraft der beiden Federn 36, 38 in die Schließposition zurückbewegt.

Beim Schließen des Magnetventils 10 bewirkt der Stützring 34 somit eine zusätzliche Schließkraft auf die Membran 30 und ermöglicht folglich ein Schließen des Magnetventils 10 gegen einen höheren Fluiddruck als dies ohne den Stützring 34 der Fall wäre.

Figur 6 veranschaulicht eine alternative Ausführungsform eines Magnetventils 10.

Der wesentliche Unterschied der in Figur 6 veranschaulichten Ausführungsform gegenüber der in den Figuren 1 bis 5 veranschaulichten Ausführungsform besteht darin, dass die beiden Federn 36, 38 einteilig miteinander verbunden sind. Insbesondere sind die Federn 36, 38 Bestandteil einer einteiligen Doppelfeder. Die grundsätzliche Form der Doppelfeder entspricht jedoch der in Figur 1 gezeigten Form der beiden Einzelfedern.

Die Verwendung einer einteiligen Doppelfeder vereinfacht die Montage des Magnetventils 10, da die Montage der einzelnen Federn 36, 38, insbesondere bei kleinen Nennweiten des Magnetventils 10, herausfordernd ist.

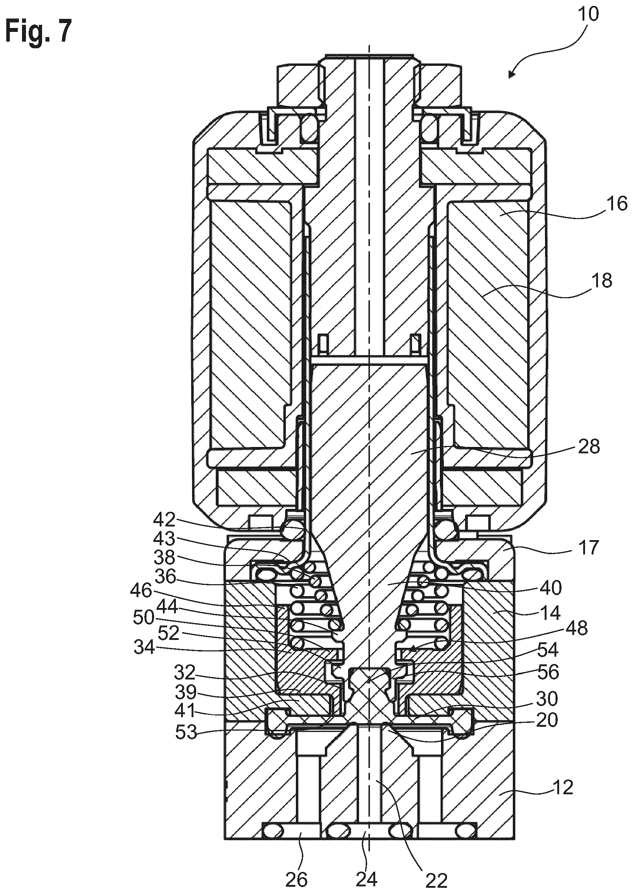

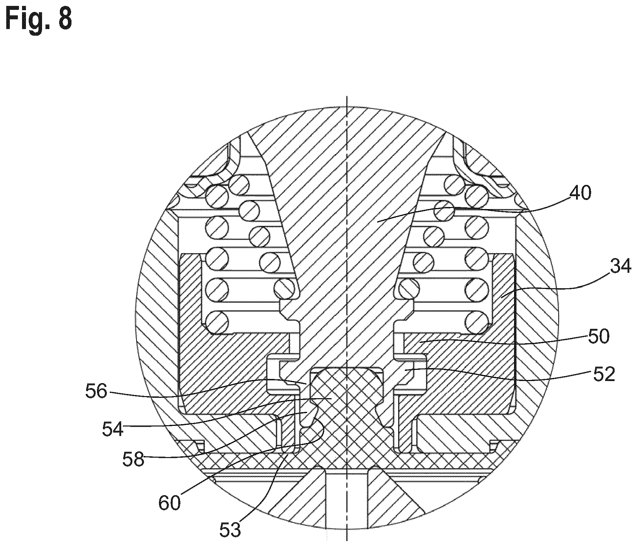

In den Figuren 7 und 8 ist eine weitere Ausführungsform des Magnetventils 10 veranschaulicht.

Ein Unterschied zwischen der in den Figuren 7 und 8 veranschaulichten Ausführungsform und der in den Figuren 1 bis 5 veranschaulichten Ausführungsform des Magnetventils 10 liegt in der Art und Weise der Koppelung des Stellglieds 28 mit der Membran 30, wie es besonders gut in der Detailansicht in Figur 7 zu sehen ist.

Bei der in den Figuren 6 und 7 gezeigten Ausführungsform ist an der Membran 30 eine Koppelungsgeometrie 54 vorhanden und im Stellglied 28 ist eine Aufnahme 56 ausgebildet, in der die Koppelungsgeometrie 54 formschlüssig aufgenommen ist. Die Aufnahme 56 hat zu diesem Zweck nach radial innen ragende Vorsprünge 58, die in einen Rücksprung 60 an der Koppelungsgeometrie 54 eingreifen.

Die Koppelungsgeometrie 54 an der Membran 30 hat insbesondere die Form eines Pilzes.

Der Befestigungsmechanismus zwischen dem Stellglied 28 und der Membran 30 ist im Vergleich zu der Ausführungsform gemäß den Figuren 1 bis 15 quasi umgekehrt.

Die in den Figuren 6 und 7 gezeigte Ausführungsform ist jedoch vorteilhaft im Hinblick auf die radiale Maßkette. Anders ausgedrückt lassen sich das Stellglied 28 und die Koppelungsgeometrie 54 in radialer Richtung schmäler ausführen als bei umgekehrter Anordnung. Dadurch lässt sich auch der an der Membran 30 anliegende Abschnitt des Stützrings 34 näher an das Stellglied 28 heranführen. Auf diese Weise lässt sich der Fluiddruck, gegen den das Magnetventil 10 geschaltet werden kann, noch weiter erhöhen. Beispielsweise kann das Magnetventil 10 gegen einen Fluiddruck von bis zu 10 bar geschaltet werden. Abgesehen davon eignet sich diese Bauweise für Ventile mit kleiner Nennweite, beispielsweise einer Nennweite zwischen 1 mm und 3 mm.

Ein weiterer Unterschied zu der in den Figuren 1 bis 5 gezeigten Ausführungsform des Magnetventils 10 besteht darin, dass der nach radial innen vorstehender Vorsprung 41 verlängert ist. Dies ist auch dadurch begründet, dass der an der Membran 30 anliegende Abschnitt des Stützrings 34 näher am Stellglied 28 angeordnet ist. Durch die Verlängerung des Vorsprungs 41 wird die Beweglichkeit der Membran 30 eingeschränkt, insbesondere wird ein Aufdehnen der Membran 30 noch besser vermieden.

Ferner ist durch den Vorsprung 41 der Stützring 34 an seinem dem Ventilsitz 20 nahen Ende nach innen abgewinkelt, so dass ein radial dünnwandigerer Hülsenfortsatz radial innenseitig des Vorsprungs 41 zur Membrane 30 verläuft und gegen sie drückt.

Es ist vorteilhaft, wenn der Stützring 34 im Bereich der Mündung des Fluidanschlusses 26 und, falls vorhanden, 27 liegt, um die Membrane 30 in diesem Bereich zu stützen.

## Patentansprüche

1. Magnetventil (10), insbesondere ein mediengetrenntes Magnetventil, mit
einem Ventilantrieb (16), der einen Elektromagneten (18) umfasst,
einem mittels des Ventilantriebs (16) zwischen einer Öffnungsstellung und einer Schließstellung beweglich gelagerten Stellglied (28),
einem Fluidgehäuse (12) mit einem Ventilsitz (20), wobei in dem Fluidgehäuse (12) ein Fluidkanal (22) von einem ersten Fluidanschluss (24) zum Ventilsitz (20) und ausgehend von dem Ventilsitz (20) zu einem zweiten Fluidanschluss (26) verläuft,
**dadurch gekennzeichnet, dass** das Magnetventil eine Membran (30) umfasst, die mit dem Ventilsitz (20) zusammenwirkt, wobei das Stellglied (28) mit der Membran (30) gekoppelt ist, so dass das Stellglied (28) in der Schließstellung die Membran (30) auf den Ventilsitz (20) drückt und in der Öffnungsstellung die Membran (30) vom Ventilsitz (20) abhebt,
dadurch, dass das Magnetventil einen in Bewegungsrichtung des Stellglieds (28) beweglich gelagerten Stützring (34) umfasst, der das Stellglied (28) umgibt und der an der Membran (30) anliegt,
und dadurch, dass zwischen dem Stützring (34) und dem Stellglied (28) eine Mitnahmegeometrie (48) vorhanden ist, die derart ausgebildet ist, dass bei einer Bewegung des Stellglieds (28) von der Schließstellung in die Öffnungsstellung ein Leerhub zwischen dem Stellglied (28) und dem Stützring (34) vorhanden ist, derart, dass bei einer anfänglichen Bewegung des Stellglieds (28) aus der Schließstellung heraus keine Bewegung des Stützrings (34) bewirkt wird und nach Überbrücken des Leerhubs der Stützring (34) durch die Mitnahmegeometrie (48) zusammen mit dem Stellglied (28) in Richtung der Öffnungsstellung des Stellglieds (28) bewegt wird.

2. Magnetventil (10) nach Anspruch 1, **dadurch gekennzeichnet, dass** das Stellglied (28) und der Stützring (34) jeweils mittels einer Feder (36, 38) zum Ventilsitz (20) hin mit einer Federkraft beaufschlagt sind.

3. Magnetventil (10) nach Anspruch 2, **dadurch gekennzeichnet, dass** die beiden Federn (36, 38) einteilig miteinander verbunden sind, insbesondere wobei die beiden Federn (36, 38) in einer Schnittdarstellung betrachtet M-förmig verlaufen, wobei der V-förmige innere Abschnitt der Feder gegen das Stellglied (28) und der zylindrische äußere Abschnitt gegen den Stützring (34) drückt.

4. Magnetventil (10) nach Anspruch 2 oder 3, **dadurch gekennzeichnet, dass** das Stellglied (28) einen zum Ventilsitz (20) konisch zulaufenden Zwischenabschnitt (40) hat, in dem die am Stellglied (28) angreifende Feder (38) sitzt.

5. Magnetventil (10) nach einem der Ansprüche 2 bis 4, **dadurch gekennzeichnet, dass** eine Ankerhülse (42) vorgesehen ist, die sich auch seitlich des Stellglieds (28) erstreckt, wobei die Ankerhülse (42) an ihrem dem Ventilsitz (20) nahen Ende einen Radialflansch (43) hat, an dem die das Stellglied (28) beaufschlagende Feder (38) und die den Stützring (34) beaufschlagende Feder (36) abgestützt sind.

6. Magnetventil (10) nach einem der vorhergehenden Ansprüche, **dadurch gekennzeichnet, dass** das Magnetventil (10) ein am Fluidgehäuse (12) befestigbares Ventilgehäuse (14) umfasst, wobei das Ventilgehäuse (14) einen Aufnahmeraum (32) aufweist, in dem der Stützring (34) angeordnet ist, und wobei in dem Ventilgehäuse (14) ein Anschlag (39) vorhanden ist, der eine Bewegung des Stützrings (34) in Richtung zum Ventilsitz (20) hin begrenzt.

7. Magnetventil (10) nach Anspruch 6, **dadurch gekennzeichnet, dass** der Stützring (34) im Ventilgehäuse (14) axial geführt ist.

8. Magnetventil (10) nach Anspruch 6 oder 7, **dadurch gekennzeichnet, dass** im Aufnahmeraum (32) ein vom Ventilgehäuse (14) nach radial innen vorstehender Vorsprung (41) vorhanden ist, der an der Membran (30) anliegt.

9. Magnetventil (10) nach einem der vorhergehenden Ansprüche, **dadurch gekennzeichnet, dass** die Mitnahmegeometrie (48) durch einen am Stützring (34) nach radial innen ragenden Kragen (50) gebildet ist, der mit einem vom Stellglied (28) nach radial außen abstehenden Kragen (52) in radialer Richtung überlappend angeordnet ist.

10. Magnetventil (10) nach einem der vorhergehenden Ansprüche, **dadurch gekennzeichnet, dass** die Mitnahmegeometrie (48) durch einen am Stützring (34) nach radial innen ragenden Kragen (50) oder einen am Stellglied (28) nach außen ragenden Kragen (52) gebildet ist, der in eine Nut am Stellglied (28) bzw. am Stützring (34) ragt und mit einem axialen Spiel in der Nut sitzt.

11. Magnetventil (10) nach einem der vorhergehenden Ansprüche, **dadurch gekennzeichnet, dass** die medienberührte Fläche der Membran (30) flach ausgebildet ist.

12. Magnetventil (10) nach einem der vorhergehenden Ansprüche, **dadurch gekennzeichnet, dass** an der Membran (30) eine Koppelungsgeometrie (54) vorhanden ist und wobei im Stellglied (28) eine Aufnahme (56) ausgebildet ist, in der die Koppelungsgeometrie (54) formschlüssig aufgenommen ist.

13. Magnetventil nach einem der Ansprüche 1 bis 11, **dadurch gekennzeichnet, dass** am Stellglied (28) eine Koppelungsgeometrie (29) vorhanden ist, wobei an der Membran (30) eine Aufnahme (31) vorhanden ist, in der die Koppelungsgeometrie (29) formschlüssig aufgenommen ist.

## Claims

1. A solenoid valve (10), in particular a media-separated solenoid valve, comprising
a valve drive (16) which comprises an electromagnet (18);
an actuator (28) mounted for movement between an open position and a closed position by means of the valve drive (16);
a fluid housing (12) having a valve seat (20), wherein a fluid channel (22) extends in the fluid housing (12) from a first fluid connection (24) to the valve seat (20) and, proceeding from the valve seat (20), to a second fluid connection (26);
**characterized in that** the solenoid valve comprises a diaphragm (30) which cooperates with the valve seat (20), wherein the actuator (28) is coupled to the diaphragm (30) so that the actuator (28), when in the closed position, presses the diaphragm (30) onto the valve seat (20) and, when in the open position, lifts the diaphragm (30) off the valve seat (20);
**in that** the solenoid valve comprises a support ring (34) which is mounted for movement in the direction of movement of the actuator (28), surrounds the actuator (28) and rests against the diaphragm (30),
and **in that** an entrainment geometry (48) is provided between the support ring (34) and the actuator (28) and is designed such that when the actuator (28) moves from the closed position to the open position, there is an idle travel between the actuator (28) and the support ring (34) such that when the actuator (28) initially moves out of the closed position, no movement of the support ring (34) is brought about and, after bridging the idle travel, the support ring (34) is moved together with the actuator (28) by the entrainment geometry (48) toward the open position of the actuator (28).

2. The solenoid valve (10) according to claim 1, **characterized in that** the actuator (28) and the support ring (34) are each acted upon with a spring force toward the valve seat (20) by means of a spring (36, 38).

3. The solenoid valve (10) according to claim 2, **characterized in that** the two springs (36, 38) are integrally connected to each other, in particular wherein the two springs (36, 38) extend in an M-shape as viewed in a sectional representation, wherein the V-shaped inner portion of the spring presses against the actuator (28) and the cylindrical outer portion presses against the support ring (34).

4. The solenoid valve (10) according to claim 2 or 3, **characterized in that** the actuator (28) has an intermediate portion (40) which conically tapers toward the valve seat (20) and in which the spring (38) engaging the actuator (28) is seated.

5. The solenoid valve (10) according to any of claims 2 to 4, **characterized in that** an armature sleeve (42) is provided which also extends laterally of the actuator (28), wherein the armature sleeve (42) has at its end close to the valve seat (20) a radial flange (43) against which the spring (38) acting on the actuator (28) and the spring (36) acting on the support ring (34) are supported.

6. The solenoid valve (10) according to any of the preceding claims, **characterized in that** the solenoid valve (10) comprises a valve housing (14) which can be fastened to the fluid housing (12), wherein the valve housing (14) has a receiving space (32) in which the support ring (34) is arranged, and wherein the valve housing (14) has a stop (39) provided therein which limits a movement of the support ring (34) toward the valve seat (20).

7. The solenoid valve (10) according to claim 6, **characterized in that** the support ring (34) is axially guided in the valve housing (14).

8. The solenoid valve (10) according to claim 6 or 7, **characterized in that** the receiving space (32) has a projection (41) provided therein which protrudes radially inward from the valve housing (14) and which rests against the diaphragm (30).

9. The solenoid valve (10) according to any of the preceding claims, **characterized in that** the entrainment geometry (48) is formed by a collar (50) which projects radially inward on the support ring (34) and which is arranged so as to overlap in the radial direction with a collar (52) which projects radially outward from the actuator (28).

10. The solenoid valve (10) according to any of the preceding claims, **characterized in that** the entrainment geometry (48) is formed by a collar (50) projecting radially inward on the support ring (34) or by a collar (52) projecting outward on the actuator (28) and which projects into a groove on the actuator (28) or on the support ring (34), respectively, and is seated in the groove with an axial clearance.

11. The solenoid valve (10) according to any of the preceding claims, **characterized in that** the media-contacted surface of the diaphragm (30) is made to be flat.

12. The solenoid valve (10) according to any of the preceding claims, **characterized in that** a coupling geometry (54) is provided on the diaphragm (30) and wherein the actuator (28) has a retainer (56) formed therein, in which the coupling geometry (54) is received with a form fit.

13. The solenoid valve according to any of claims 1 to 11, **characterized in that** a coupling geometry (29) is provided on the actuator (28), wherein the diaphragm (30) has a retainer (31) provided thereon, in which the coupling geometry (29) is received with a form fit.

## Revendications

1. Électrovanne (10), en particulier électrovanne à séparation de milieux, comprenant
une commande de vanne (16) qui comprend un électroaimant (18),
un actionneur (28) monté de manière à être mobile entre une position d'ouverture et une position de fermeture au moyen de la commande de vanne (16),
un boîtier de fluide (12) comprenant un siège de vanne (20), un canal de fluide (22) s'étendant dans le boîtier de fluide (12) depuis un premier raccord de fluide (24) jusqu'au siège de vanne (20) et, à partir du siège de vanne (20), jusqu'à un deuxième raccord de fluide (26),
**caractérisée en ce que** l'électrovanne comprend une membrane (30) qui coopère avec le siège de vanne (20), l'actionneur (28) étant couplé à la membrane (30) de telle sorte que, dans la position de fermeture, l'actionneur (28) appuie la membrane (30) sur le siège de vanne (20) et, dans la position d'ouverture, soulève la membrane (30) du siège de vanne (20),
**en ce que** l'électrovanne comprend une bague d'appui (34) qui est montée de manière à être mobile dans le sens de mouvement de l'actionneur (28), qui entoure l'actionneur (28) et qui repose contre la membrane (30),
et **en ce qu'**une géométrie d'entraînement (48) est prévue entre la bague d'appui (34) et l'actionneur (28), laquelle est réalisée de telle sorte que, lors d'un mouvement de l'actionneur (28) de la position de fermeture vers la position d'ouverture, il existe une course à vide entre l'actionneur (28) et la bague d'appui (34), de telle sorte que, lors d'un mouvement initial de l'actionneur (28) à partir de la position de fermeture, aucun mouvement de la bague d'appui (34) n'est provoqué et qu'une fois la course à vide franchie, la bague d'appui (34) est déplacée par la géométrie d'entraînement (48) conjointement avec l'actionneur (28) en direction de la position d'ouverture de l'actionneur (28).

2. Électrovanne (10) selon la revendication 1, **caractérisée en ce que** l'actionneur (28) et la bague d'appui (34) sont chacun sollicités vers le siège de vanne (20) par une force de ressort au moyen d'un ressort (36, 38).

3. Électrovanne (10) selon la revendication 2, **caractérisée en ce que** les deux ressorts (36, 38) sont reliés l'un à l'autre d'un seul tenant, les deux ressorts (36, 38), vus dans une représentation en coupe, présentant en particulier une forme en M, la partie intérieure en V du ressort appuyant contre l'actionneur (28) et la partie extérieure cylindrique appuyant contre la bague d'appui (34).

4. Électrovanne (10) selon la revendication 2 ou 3, **caractérisée en ce que** l'actionneur (28) présente une partie intermédiaire (40) qui se rétrécit de manière conique vers le siège de vanne (20) et dans laquelle est logé le ressort (38) en engagement avec l'actionneur (28).

5. Électrovanne (10) selon l'une des revendications 2 à 4, **caractérisée en ce qu'**il est prévu une douille d'induit (42) qui s'étend également latéralement par rapport à l'actionneur (28), la douille d'induit (42) comportant, à son extrémité proche du siège de vanne (20), une bride radiale (43) sur laquelle s'appuient le ressort (38) sollicitant l'actionneur (28) et le ressort (36) sollicitant la bague d'appui (34).

6. Électrovanne (10) selon l'une des revendications précédentes, **caractérisée en ce que** l'électrovanne (10) comprend un boîtier de vanne (14) apte à être fixé au boîtier de fluide (12), le boîtier de vanne (14) présentant un espace de logement (32) dans lequel est agencée la bague d'appui (34), et une butée (39) limitant un mouvement de la bague d'appui (34) en direction du siège de vanne (20) étant prévue dans le boîtier de vanne (14).

7. Électrovanne (10) selon la revendication 6, **caractérisée en ce que** la bague d'appui (34) est guidée axialement dans le boîtier de vanne (14).

8. Électrovanne (10) selon la revendication 6 ou 7, **caractérisée en ce qu'**une saillie (41) qui fait saillie radialement vers l'intérieur à partir du boîtier de vanne (14) et qui s'appuie contre la membrane (30) est prévue dans l'espace de logement (32).

9. Électrovanne (10) selon l'une des revendications précédentes, **caractérisée en ce que** la géométrie d'entraînement (48) est formée par une collerette (50) sur la bague d'appui (34) qui fait saillie radialement vers l'intérieur et qui est agencée de manière à se chevaucher dans le sens radial avec une collerette (52) faisant saillie radialement vers l'extérieur à partir de l'actionneur (28).

10. Électrovanne (10) selon l'une des revendications précédentes, **caractérisée en ce que** la géométrie d'entraînement (48) est formée par une collerette (50) sur la bague d'appui (34) faisant saillie radialement vers l'intérieur ou par une collerette (52) sur l'actionneur (28) faisant saillie vers l'extérieur, qui fait saille dans une rainure sur l'actionneur (28) ou la bague d'appui (34), respectivement, et qui est logée dans la rainure avec un jeu axial.

11. Électrovanne (10) selon l'une des revendications précédentes, **caractérisée en ce que** la surface de la membrane (30) en contact avec les milieux est plane.

12. Électrovanne (10) selon l'une des revendications précédentes, **caractérisée en ce qu'**une géométrie de couplage (54) est prévue sur la membrane (30), et un logement (56) étant réalisé dans l'actionneur (28), dans lequel la géométrie de couplage (54) est logée par coopération de formes.

13. Électrovanne selon l'une des revendications 1 à 11, **caractérisée en ce qu'**une géométrie de couplage (29) est prévue sur l'actionneur (28), un logement (31) étant prévu sur la membrane (30), dans lequel la géométrie de couplage (29) est logée par coopération de formes.
